# EUROPÄISCHE PATENTSCHRIFT

(11) **EP 2 669 300 B1**
(45) Veröffentlichungstag und Bekanntmachung des Hinweises auf die Patenterteilung: **14.03.2018**
(21) Anmeldenummer: 13168566.1
(22) Anmeldetag: 21.05.2013
(51) Int. Cl.: C08F 6/00, C08F 36/06, C08F 36/08, C08C 1/075, C08F 2/06

(54) **Polymerisation von Dienen**
Polymerisation of dienes
Polymérisation de diènes

(30) Priorität: 29.05.2012 EP 12169794
(43) Veröffentlichungstag der Anmeldung: 04.12.2013
(73) Patentinhaber: Evonik Degussa GmbH, 45128 Essen (DE)
(72) Erfinder: Beierlein, Christine, Dr., 44795 Bochum (DE); Haberkorn, Niko, Dr., 46282 Dorsten (DE); Korell, Michael, Dr., 44805 Bochum (DE); Grünfelder, Thomas, Dr., 45657 Recklinghausen (DE); Richter, Norbert, Dr., 45772 Marl (DE); Oldenkott, Michael, 45721 Haltern (DE); Pospiech, Jürgen, 44799 Bochum (DE); Haneke, Martin, 48149 Münster (DE); Berlineanu, Andreas, Dr., 45772 Marl (DE); Denkinger, Peter, Dr., 48301 Nottuln (DE); Hellwig, Jürgen, 58239 Schwerte (DE)

(56) Entgegenhaltungen:
- WO-A1-2006/009981
- DE-A1- 1 800 938
- DE-A1- 1 816 528
- GB-A- 849 232
- JP-A- 11 092 527
- US-A- 3 333 015
- US-A- 3 796 762
- US-A- 3 948 960
- US-A- 5 153 287

## Beschreibung

Die Erfindung betrifft gemäß Anspruch 1 ein Verfahren zur Polymerisation eines Diens, umfassend die Schritte Umsetzung des Diens mit Wasserstoffperoxid in einem hydrophilen organischen Lösungsmittel in Anwesenheit von Wasser unter Bildung eines Reaktionsgemisches bei Temperaturen von 50 bis 150 °C und Druckwerten von 0 - 50 bar, Kontaktieren des Reaktionsgemisches mit Wasser, wobei die Temperatur des Wassers 20 bis 80 °C, bevorzugt 50 bis 65 °C beträgt, Abtrennen von nicht abreagiertem gasförmigen Dien von dem mit Wasser kontaktierten Reaktionsgemisch aus Schritt b), gefolgt von Kondensation, Destillation und Wiederverwendung des nicht abreagierten gasförmigen Diens, Abtrennung der wässrigen Phase umfassend das hydrophile Lösungsmittel vom Reaktionsgemisch, gefolgt von und Wiederverwendung des hydrophilen Lösungsmittels in Schritt a), und destillatives Reinigen des Polymerisationsproduktes sowie eine dazu eingerichtete Anlage sowie die Verwendung dieser Anlage zur Polymerisation eines Diens, wobei es sich bei dem Dien um bevorzugt 1,3-Butadien oder Isopren handelt.

Diene stellen eine Klasse industriell hoch relevanter organischer Verbindungen dar. Wichtige Vertreter wie 1,3-Butadien, Isopren, Cyclopentadien und dergleichen sind interessante und wichtige Ausgangsstoffe für chemische Synthesen gleichermaßen im Labor- und Großmaßstab. Aus Dienen hergestellte Endprodukte umfassen Synthesekautschuk, Acrylnitril-Butadien-Styrol und Polyamide.

Diene sind in großen Mengen aus dem Cracken von Erdöl erhältlich, wo sie aus der Gasphase der Steamcrackerprodukte gewonnen werden können. Die dabei erhaltenen Dien-Monomerbausteine müssen für viele Anwendungen polymerisiert werden.

Aus der Literatur sind verschiedene dazu geeignete Verfahren bekannt, beispielsweise diejenigen, die die Polymerisation von 1,3-Butadien beschreiben. So offenbart die DE 2215748 ein Verfahren zu Herstellung von niedermolekularen Polymeren aus konjugierten Dienen. Das zu Grunde liegende Reaktionssystem umfasst Trihydrocarbylorthophoshatester oder alternativ gesättigte monocyclische, alicyclische Alkohole oder Ketone.

Die im Stand der Technik beschriebenen Verfahren sind mit Hinblick auf die Produktausbeute relativ zur Menge des eingesetzten Diens verbesserungswürdig. Insbesondere bei denjenigen Verfahren, die sich sauerstoffhaltiger Reagenzien bedienen, besteht darüber hinaus Bedarf, die Gefahr von Explosionen durch eine geeignete Reaktionsführung und Aufreinigung des Dien-Monomers zu verringern.

Eine der Erfindung zu Grunde liegende Aufgabe bestand vor diesem Hintergrund darin, ein Verfahren zur Polymerisation von Dienen mit möglichst hoher Ausbeute an polymerisiertem Dien im Verhältnis zum eingesetzten Dien-Monomer bereitzustellen.

Eine weitere der Erfindung zu Grund liegende Aufgabe bestand darin, ein Verfahren zur Polymerisation von Dienen bereitzustellen, das höheren Sicherheitsanforderungen genügt, besonders mit Hinblick auf Explosionsgefahr.

Eine weitere der Erfindung zu Grunde liegende Aufgabe bestand darin, ein Verfahren zur Polymerisation von Dienen mit einem geringeren Nettoverbrauch an organischen Lösungsmitteln, bevorzugt bezogen auf die Menge des erhaltenen Dienpolymers, bereitzustellen.

Eine weitere der Erfindung zu Grunde liegende Aufgabe bestand darin, ein Verfahren zu Polymerisation von Dienen bereitzustellen, bei dem die Ausbeute an polymerisiertem Dien bei möglichst niedrig bleibender Viskosität erhöht ist.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

In einem ersten Aspekt wird das der Erfindung zu Grunde liegende Problem gelöst durch ein Verfahren gemäß Anspruch 1 zur Polymerisation eines Diens, umfassend die Schritte
a) Umsetzung des Diens mit Wasserstoffperoxid in einem hydrophilen organischen Lösungsmittel in Anwesenheit von Wasser unter Bildung eines Reaktionsgemisches bei Temperaturen von 50 - 150 °C und Druckwerten von 0 bis 50 bar.
b) Kontaktieren des Reaktionsgemisches mit Wasser, wobei die Temperatur des Wassers 20 bis 80 °C, bevorzugt 30 bis 70 °C, noch bevorzugter 50 bis 65 °C beträgt.
c) Abtrennen von nicht abreagiertem gasförmigen Dien von dem mit Wasser kontaktierten Reaktionsgemisch aus Schritt b), gefolgt von Kondensation, Destillation und Wiederverwendung des nicht abreagierten gasförmigen Diens,
d) Abtrennen der wässrigen Phase umfassend das hydrophile Lösungsmittel vom Reaktionsgemisch, gefolgt von Wiederverwendung des hydrophilen Lösungsmittels in Schritt a), und
e) Destillatives Reinigen des Polymerisationsproduktes.

In einer ersten Ausführungsform des ersten Aspekts wird das Problem gelöst durch ein Verfahren, wobei es sich bei dem hydrophilen Lösungsmittel um ein bei Raumtemperatur flüssiges Alkanol, bevorzugt Isopropanol oder Ethanol, handelt.

In einer zweiten Ausführungsform, die auch eine Ausführungsform der ersten Ausführungsform darstellt, wird das Problem gelöst durch ein Verfahren, wobei der Anteil in Schritt a) des hydrophilen Lösungsmittels 15 bis 30 Gew.-%, bevorzugt 20 bis 30 oder 22 bis 30 Gew.-%, der des Diens 60 bis 80 Gew.-%, der des Wassers weniger als 10 Gew.-%, bevorzugt 2 bis 8,1 Gew.-%, und der des Wasserstoffperoxids 1 bis 5 Gew.-% beträgt.

In einer dritten Ausführungsform, die auch eine Ausführungsform der ersten bis zweiten Ausführungsform darstellt, wird das Problem durch ein Verfahren gelöst, wobei Schritt a) bei einer Temperatur von 90 bis 130 °C, bevorzugt 110 bis 130 °C durchgeführt wird.

In einer vierten Ausführungsform, die auch eine Ausführungsform der ersten bis dritten Ausführungsform darstellt, wird das Problem durch ein Verfahren gelöst, wobei Schritt a) bei Druckwerten von 12 bis 30 bar durchgeführt wird.

In einer fünften Ausführungsform, die auch eine Ausführungsform der ersten bis vierten Ausführungsform darstellt, wird das Problem durch ein Verfahren gelöst, wobei das Reaktionsgemisch aus Schritt a) zu Beginn von Schritt b) eine um nicht mehr als 20, bevorzugte 15, noch bevorzugter 10 °C niedrigere Temperatur als in Schritt a) aufweist. In einer weiteren bevorzugten Ausführungsform wird das Reaktionsgemisch aus Schritt a) vor Beginn von Schritt b) abgekühlt, bevorzugt um wenigstens 10, 15, 20, 25, 30 oder 40 °C.

In einer sechsten Ausführungsform, die auch eine Ausführungsform der ersten bis fünften Ausführungsform darstellt, wird das Problem durch ein Verfahren gelöst, wobei die Temperatur des Reaktionsgemisches bei Schritt a) 110 bis 130 °C und die Temperatur des Reaktionsgemisches zu Beginn von Schritt b) nicht weniger als 100 °C beträgt.

In einer siebten Ausführungsform, die auch eine Ausführungsform der ersten bis sechsten Ausführungsform darstellt, wird das Problem durch ein Verfahren gelöst, wobei es sich bei dem Dien um 1,3-Butadien oder Isopren handelt.

In einer achten Ausführungsform, die auch eine Ausführungsform der ersten bis siebten Ausführungsform darstellt, wird das Problem durch ein Verfahren gelöst, wobei das Wasser in Schritt b) eine Temperatur von wenigstens 40 °C, bevorzugt 40 bis 80 °C, noch bevorzugter 50 bis 65 °C aufweist.

In einer neunten Ausführungsform, die auch eine Ausführungsform der ersten bis achten Ausführungsform darstellt, wird das Problem durch ein Verfahren gelöst, wobei in Schritt c) das kondensierte Dien mit einem Desoxidationsmittel kontaktiert wird.

In einer zehnten Ausführungsform, die auch eine Ausführungsform der neunten Ausführungsform darstellt, wird das Problem durch ein Verfahren gelöst, wobei das Desoxidationsmittel bevorzugt aus der Gruppe ausgewählt ist, die Dithionit, Pyrogallol, Ascorbinsäure und eine Mischung umfassend Bisulfit und Sulfit umfasst.

In einer elften Ausführungsform, die auch eine Ausführungsform der ersten bis zehnten Ausführungsform darstellt, wird das Problem durch ein Verfahren gelöst, wobei als Desoxidationsmittel eine Mischung umfassend Bisulfit und Sulfit in einer Endkonzentration von 0,1 bis 1,5 Gew.-%, bevorzugt 0,2 bis 1 Gew.-% zum kondensierten Dien gegeben wird.

In einer zwölften Ausführungsform, die auch eine Ausführungsform der ersten bis elften Ausführungsform darstellt, wird das Problem durch ein Verfahren gelöst, wobei Schritt d) unter Verwendung eines Dekanters durchgeführt wird.

In einer dreizehnten Ausführungsform, die auch eine Ausführungsform der ersten bis zwölften Ausführungsform darstellt, wird das Problem durch ein Verfahren gelöst, wobei die Reaktionsmischung aus Schritt a) ohne vorherige Kühlung in Schritt b) mit Wasser kontaktiert wird.

In einer vierzehnten Ausführungsform, die auch eine Ausführungsform der ersten bis dreizehnten Ausführungsform darstellt, wird das Problem durch ein Verfahren gelöst, wobei wenigstens ein Teil des nicht abreagierten gasförmigen Diens vor dem Kontaktieren mit Wasser in Schritt b) vom Reaktionsgemisch abgetrennt wird, gefolgt von Kondensation, Destillation und Wiederverwendung des nicht abreagierten gasförmigen Diens.

In einem zweiten Aspekt wird das der Aufgabe zu Grunde liegende Problem gelöst durch eine Anlage gemäß Anspruch 12 zur Polymerisation eines bei Raumtemperatur gasförmigen Diens
umfassend einen Reaktionsbehälter (1) zur Polymerisation des Diens,
eingerichtet für die Umsetzung eines Diens mit Wasserstoffperoxid in einem hydrophilen organischen Lösungsmittel unter Bildung einer Reaktionsmischung,
umfassend eine Flash-Anlage (2),
eingerichtet dafür, dass die Reaktionsmischung aus dem Reaktionsbehälter (1) in sie abführbar ist,
eingerichtet dafür, dass nicht abreagiertes, gasförmiges Dien aus der Flash-Anlage von der Reaktionsmischung abtrennbar und überführbar ist in eine Vorrichtung zur Kondensation (5), anschließend in eine Vorrichtung zur Destillation (6) und schließlich zurück in den Reaktionsbehälter (1),
eingerichtet dafür, dass darin Wasser vorgelegt und mit der Reaktionsmischung aus dem Reaktionsbehälter (1) kontaktiert werden kann unter Bildung einer wässrigen, das hydrophile organische Lösungsmittel umfassenden Phase,
weiter umfassend eine der Flash-Anlage nachgeschaltete Anlage zur Phasentrennung (3),
eingerichtet dafür, dass die von dem nicht abreagierten, gasförmigen Dien abgetrennte Reaktionsmischung aus der Flash-Anlage (2) in sie überführbar ist,
eingerichtet dafür, dass die wässrige, das hydrophile organische Lösungsmittel umfassende Phase von der Reaktionsmischung abtrennbar und überführbar ist zunächst in eine Vorrichtung zur Destillation (7) und schließlich zurück in den Reaktionsbehälter (1),
weiter umfassend eine der Anlage zur Phasentrennung (3) nachgeschaltete Vorrichtung zur Destillation (4),
eingerichtet dafür, dass die von der wässrigen, das hydrophile organische Lösungsmittel umfassenden Phase abgetrennte Reaktionsmischung aus der Anlage zur Phasentrennung (3) in sie überführbar ist,
eingerichtet dafür, dass das Produkt aus der von der wässrigen, das hydrophile organische Lösungsmittel umfassenden Phase abgetrennten Reaktionsmischung destillativ aufgereinigt werden kann.

In einer ersten Ausführungsform des zweiten Aspekts wird das Problem gelöst durch eine Anlage, wobei es sich bei dem Reaktionsbehälter (1) um einen Behälter aus passiviertem Edelstahl handelt.

In einer zweiten Ausführungsform, die auch eine Ausführungsform der ersten Ausführungsform darstellt, wird das Problem gelöst durch eine Anlage, wobei die Eigenschaft, dass die Reaktionsmischung oder die das hydrophile organische Lösungsmittel umfassende Phase oder das nicht abreagierte, gasförmige Dien zwischen dem Reaktionsbehälter (1), der Flash-Anlage (2), der Vorrichtung zur Kondensation (5), der Vorrichtung zur Destillation (6), der Anlage zur Phasentrennung (3), der Vorrichtung zur Destillation (7) überführbar sind, durch geeignete verbindende Rohrleitungen gegeben ist.

In einer dritten Ausführungsform, die auch eine Ausführungsform der ersten bis zweiten Ausführungsform darstellt, wird das Problem gelöst durch eine Anlage, wobei die Vorrichtung zur Kondensation (5) ein Desoxidationsmittel umfasst, das bevorzugt aus der Gruppe ausgewählt ist, die Dithionit, Pyrogallol, Ascorbinsäure und eine Mischung umfassend Bisulfit und Sulfit umfasst.

In einer vierten Ausführungsform, die auch eine Ausführungsform der ersten bis dritten Ausführungsform darstellt, wird das Problem gelöst durch eine Anlage, wobei es sich bei der Anlage zur Phasentrennung (3) um einen Dekanter handelt.

In einer fünften Ausführungsform, die auch eine Ausführungsform der ersten bis vierten Ausführungsform darstellt, wird das Problem gelöst durch eine Anlage, wobei der Reaktionsbehälter (1) eingerichtet ist dafür, dass nichtabreagiertes, gasförmiges Dien aus dem Reaktionsbehälter überführbar ist in eine Vorrichtung zur Kondensation (5), anschließend in eine Vorrichtung zur Destillation (6) und schließlich zurück in den Reaktionsbehälter (1).

Das der Erfindung zu Grunde liegende Problem wird in einem dritten Aspekt gelöst durch Verwendung der Anlage nach einem der Ansprüche 12 bis 15 zur Polymerisation eines Diens, bevorzugt 1,3-Butadien oder Isopren.

Die vorliegende Erfindung beruht auf der überraschenden Erkenntnis der Erfinder, dass die Ausbeute eine Dienpolymerisation und die Reinheit des Dienpolymerproduktes unter Verwendung des erfindungsgemäßen Verfahrens gegenüber herkömmlichen Verfahren zur Dienpolymerisation erhöht sind.

Die vorliegende Erfindung beruht weiterhin auf der überraschenden Erkenntnis der Erfinder, dass die Menge des benötigen Lösungsmittels unter Verwendung des erfindungsgemäßen Verfahrens gegenüber herkömmlichen Verfahren zur Dienpolymerisation verringert ist.

Die vorliegende Erfindung beruht weiterhin auf der überraschenden Erkenntnis der Erfinder, dass ein zur radikalischen Polymerisation geeignetes Verfahren erhöhten Sicherheitsanforderungen genügt, wenn auftretende reaktive Sauerstoffspezies nach Abtrennung von der Polymerisationsreaktion rasch durch Kontakieren mit wenigstens einem Desoxidationsmittel eliminiert werden.

Die vorliegende Erfindung beruht weiterhin auf der überraschenden Erkenntnis der Erfinder, dass eine Begrenzung des Wasseranteils in der Reaktionsmischung, in der die Polymerisation abläuft, bei gleichzeitig hohem Anteil eines hydrophilen organischen Lösungsmittel die Ausbeute an Dienpolymerisationsprodukt erhöht.

Mittels des erfindungsgemäßen Verfahrens können Diene in vorteilhafter Weise polymerisiert werden. In einer bevorzugten Ausführungsform wird unter dem Begriff "Dien", wie hierin verwendet, ein organisches, aliphatisches, verzweigtes oder unverzweigtes Molekül mit zwei Doppelbindungen verstanden, besonders bevorzugt ein Molekül der Summenformel CₙH₂ₙ₋₂. Entscheidend ist das Vorhandensein zweier Doppelbindungen, bevorzugterweise konjugierter Doppelbindungen, die die Polymerisation nach Zugabe von Wasserstoffperoxid als Initiator erlauben. Besonders bevorzugte Diene umfassen 1,3-Butadien und Isopren. Auch die Polymerisation von Mischungen verschiedener Diene ist erfindungsgemäß möglich.

Im erfindungsgemäßen Verfahren läuft die Polymerisation in Schritt a) ab. Die Polymerisation des Diens nach Wasserstoffperoxidzugabe verläuft dabei nach einem radikalischen Mechanismus ab, bei dem ein Hydroxyl-Radikal eine C=C-Doppelbindung des Diens unter Bildung eines Kohlenstoffradikals und einer Hydroxylgruppe am Kohlenstoffatom angreift. Das Kohlenstoffradikal kann die Polymerisationsreaktion durch Angriff einer weiteren C=C-Doppelbindung fortsetzen. Die Reaktion kommt u.a. durch Reaktion zweier Radikale zum Erliegen. Als Reaktionsprodukt kommt dementsprechend ein Dienpolymer mit mindestens zwei Hydroxygruppen in Frage. Es können auch spezielle Radikalfänger eingesetzt werden, deren Verwendung zur Bildung von Dienpolymeren mit anderen endständigen Gruppen führt. Das Molekulargewicht kann u.a. über Konzentration und Verhältnis von Monomeren, Initiatoren und ggf. Radikalfängern gesteuert werden.

Die durch Wasserstoffperoxid initiierte Polymerisation von Dien läuft erfindungsgemäß in Anwesenheit eines hydrophilen organischen Lösungsmittel und in Anwesenheit von Wasser ab. In einer bevorzugten Ausführungsform wird unter dem Begriff "hydrophiles organisches Lösungsmittel" ein organisches Lösungsmittel verstanden, das bei 25 °C mit Wasser mischbar ist, ohne dass es zur Ausbildung einer von der wässrigen Phase getrennten organischen Phase kommt. In einer bevorzugten Ausführungsform handelt es sich bei dem hydrophilen organischen Lösungsmittel um bei Raumtemperatur flüssiges unverzweigtes oder verzweigtes Alkanol, noch bevorzugter um ein unverzweigtes oder verzweigtes 1-Alkanol, am bevorzugtesten um Isopropanol oder Ethanol. Der Anteil des hydrophilen organischen Lösungsmittels, bevorzugt von Ethanol, beträgt 15 bis 30 Gew.-%, bevorzugt 17,5 bis 30 Gew.-%, noch bevorzugter 20 bis 30 oder 22 bis 30 Gew.-%. Entscheidend für das Erzielen einer optimalen Ausbeute ist der Anteil an Wasser in Schritt a), der nicht zu hoch sein darf und in der Reihenfolge zunehmender Bevorzugung weniger als 10, 9, 8, 7, 6, 5 oder 4 Prozent und beträgt besonders bevorzugt 2 bis 8,1 Gew.-% beträgt.

Die ab Zugabe des Starters bemessene Reaktionszeit in Schritt a) beträgt wenigstens 0,5, bevorzugter 1, 1,5, 2 oder 3 Stunden.

Ein Teil des nicht abreagierten Dien-Monomers, das bei Druckwerten von bis zu 50 bar vorliegt, wird unmittelbar nach Ende der Reaktion durch Druckablass entfernt.

In Schritt b) des erfindungsgemäßen Verfahrens wird die Reaktionsmischung aus Schritt a) mit Wasser kontaktiert. In einer bevorzugten Ausführungsform wird dazu auf 20 bis 80, bevorzugt 50 bis 65 °C temperiertes Wasser in einem geeigneten Behälter, bevorzugt in einer Flash-Anlage, vorgelegt und die Reaktionsmischung aus Schritt a) wird hineingeleitet.

Bei dem erfindungsgemäß eingesetzten Wasser handelt es sich in einer besonders bevorzugten Ausführungsform um vollentsalztes Wasser.

In Schritt c) des erfindungsgemäßen Verfahrens wird weiteres nicht abreagiertes gasförmiges Dien von dem mit Wasser kontaktierten Reaktionsgemisch aus Schritt b) abgetrennt, vorzugsweise in der Weise, dass relativ zum Atmosphärendruck Unterdruck angelegt wird. In einer besonders bevorzugten Ausführungsform wird dieser Schritt in einer Flash-Anlage ausgeführt. In einer bevorzugten Ausführungsform wird unter dem Begriff "Flash-Anlage", wie hierin verwendet, ein als Entspannungsverdampfungsbehälter geeigneter Behälter verstanden, beispielsweise ein Rührbehälter aus passiviertem Edelstahl, der temperierbar und vakuumtauglich ausgestattet ist. Die Schritte a) und b) können in einer bevorzugten Ausführungsform im gleichen Behälter durchgeführt werden, sofern dieser als Flash-Anlage ausgestattet ist. Die Abtrennung eines Gases mittels einer Flash-Anlage ist in Fluidverfahrenstechnik, herausgegeben von R. Goedecke, S.693 2006 Wiley-VCH Verlag GmbH & Co KGaA, Weinheim, beschrieben.

Das abgetrennte nicht abreagierte Dien aus Schritt a) und aus Schritt c), wird durch Kondensation und Destillation zurückgewonnen und erneut für die Polymerisationsreaktion in Schritt a) verwendet.

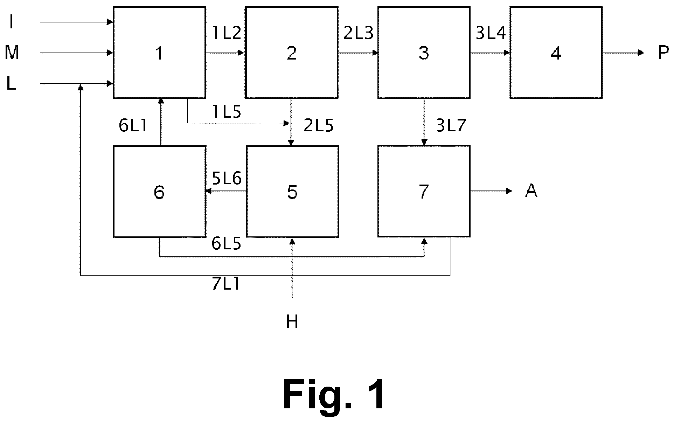

Vorteilhafterweise wird das Verfahren derart ausgeführt, dass das in Schritt c) kondensierte Dien mit einem Desoxidationsmittel kontaktiert wird. In einer bevorzugten Ausführungsform wird unter dem Begriff "Desoxidationsmittel", wie hierein verwendet, eine Verbindung verstanden, die die Konzentration von reaktiven Sauerstoffverbindungen erniedrigt. Beispiele geeigneter Radikalfänger umfassen Bisulfit, Sulfit und Dithionit oder Mischungen davon. Der Desoxidationsmittel wird, sofern es sich um eine Mischung umfassend Bisulfit und Sulfit handelt, bevorzugt in einer Endkonzentration von 0,1 bis 1,5, bevorzugt 0, 2 bis 1 Gew.-% zum kondensierten Dien gegeben. In einer bevorzugten Ausführungsform beträgt die Konzentration des Desoxidationsmittels beim Kontaktieren mit dem kondensierten Diens 0,1 bis 5, bevorzugter 0,5 bis 5 Moleküle Desoxidationsmittel pro Molekül aktiver Sauerstoffverbindung in der Lösung umfassend das kondensierte Dien, wobei der Begriff "aktive Sauerstoffverbindung" in einer bevorzugten Ausführungsform Wasserstoffperoxid, organische Peroxide und Sauerstoff umfasst. In einer weiteren bevorzugten Ausführungsform beträgt die Konzentration beim Kontaktieren mit dem Dien wenigstens 0,5, 1, 2, 2,5 oder 5 Moleküle Desoxidationsmittel pro bei der radikalischen Polymerisation eingesetztem Molekül Wasserstoffperoxid.
In Schritt d) des erfindungsgemäßen Verfahrens wird die wässrige Phase mit dem hydrophilen organischen Lösungsmittel vom Reaktionsgemisch abgetrennt, das danach überwiegend das Polymerisationsprodukt umfasst. Die Abtrennung erfolgt ein einer bevorzugten Ausführungsform mittels eines Dekanters, der auch Teil der erfindungsgemäßen Anlage sein kann. Aus der wässrigen Phase kann das hydrophile organische Lösungsmittel destillativ zurückgewinnen und erneut für die Polmyerisationsreaktion in Schritt a) eingesetzt werden. Destillationsverfahren sind in Fluidverfahrenstechnik, herausgegeben von R. Goedecke, S.689ff (Kapitel 8 Rektifikation) 2006 Wiley-VCH verlag GmbH & co KGaA, Weinheim, beschrieben.
In einer weiteren bevorzugten Ausführungsform kann die Reaktionsmischung vor Schritt d) als Teil des erfindungsgemäßen Verfahrens oder der erfindungsgemäßen Anlage über einen Pufferbehälter geleitet werden.
In Schritt e) des erfindungsgemäßen Verfahrens wird das Polymerisationsprodukt von organischen Nebenprodukten, beispielsweise Dien-Dimeren destillativ gereinigt, bevorzugt über einen Dünnschichtverdampfer. Geeignete Verfahren sind in Fluidverfahrenstechnik, herausgegeben von R. Goedecke, S.637ff 2006 Wiley-VCH Verlag GmbH & co KGaA, Weinheim, beschrieben.
Das erfindungsgemäße Verfahren eignete sich zur Ausführung in jeglichem Maßstab, gleichermaßen im Labor- oder im Industriemaßstab. Für letzteren Fall eignet sich insbesondere die in **Fig. 1** dargestellte erfindungsgemäße Anlage. Sie umfasst zunächst einen Reaktionsbehälter (1) zur Polymerisation des Diens, eingerichtet für die Umsetzung eines Diens mit Wasserstoffperoxid in einem hydrophilen organischen Lösungsmittel unter Bildung einer Reaktionsmischung. Bei dem Reaktionsbehälter handelt es sich bevorzugt um einen Reaktionsbehälter aus passiviertem Edelstahl.

Weiterhin umfasst die erfindungsgemäße Anlage einen Flash-Behälter (2), eingerichtet dafür, dass die Reaktionsmischung aus dem Reaktionsbehälter (1) in ihn abführbar ist, eingerichtet dafür, dass nicht abreagiertes, gasförmiges Dien aus dem Flash-Behälter von der Reaktionsmischung abtrennbar und überführbar ist in eine Vorrichtung zur Kondensation (5), anschließend in eine Vorrichtung zur Destillation (6) und schließlich zurück in den Reaktionsbehälter (1), eingerichtet dafür, dass darin Wasser vorgelegt und mit der Reaktionsmischung aus dem Reaktionsbehälter (1) kontaktiert werden kann unter Bildung einer wässrigen, das hydrophile organische Lösungsmittel umfassenden Phase. Der Reaktionsbehälter (1) ist über eine Leitung (1 L2) mit der nachfolgenden Flash-Anlage (2) verbunden.

Weiterhin umfasst die erfindungsgemäße Anlage eine der Flash-Anlage (2) nachgeschaltete Anlage zur Phasentrennung (3), eingerichtet dafür, dass die von dem nicht abreagierten, gasförmigen Dien abgetrennte Reaktionsmischung aus der Flash-Anlage (2) in sie überführbar ist, eingerichtet dafür, dass die wässrige, das hydrophile organische Lösungsmittel umfassende Phase von der Reaktionsmischung abtrennbar und überführbar ist zunächst in eine Vorrichtung zur Destillation (7) und schließlich zurück in den Reaktionsbehälter (1). Die Anlage zur Phasentrennung (3) ist über eine Leitung (2L3) mit der Flash-Anlage verbunden.

Weiterhin umfasst die erfindungsgemäße Anlage eine der Anlage zur Phasentrennung (3) nachgeschaltete Vorrichtung zur Destillation (4), eingerichtet dafür, dass die von der wässrigen, das hydrophile organische Lösungsmittel umfassenden Phase abgetrennte Reaktionsmischung aus der Anlage zur Phasentrennung (3) in sie überführbar ist, und eingerichtet dafür, dass das Produkt aus der von der wässrigen, das hydrophile organische Lösungsmittel umfassenden Phase abgetrennten Reaktionsmischung destillativ aufgereinigt werden kann. Die Anlage zur Phasentrennung ist über eine Leitung (3L4) mit der Vorrichtung zur Destillation verbunden.

Erfindungsgemäß besteht die Möglichkeit, gasförmiges Dien aus dem Reaktionsbehälter direkt in die Vorrichtung zur Kondensation (5) oder über eine die Flash-Anlage (2) mit der Vorrichtung zur Kondensation (2) verbindende Leitung (2L5) einzulassen, beispielsweise über eine dafür eingerichtete Leitung (1 L5).

In einer bevorzugten Ausführungsform enthält die Vorrichtung zur Kondensation wenigstens ein Desoxidationsmittel.

Die vorliegende Erfindung wird weiterhin durch die folgenden Figuren und nicht beschränkenden Beispiele veranschaulicht, denen weitere Merkmale, Ausführungsformen, Aspekte und Vorteile der vorliegenden Erfindung entnommen werden können.

**Fig. 1** zeigt eine erfindungsgemäße Anlage zur Ausführung des erfindungsgemäßen Verfahrens umfassend einen Reaktionsbehälter (1) zur Polymerisation des Diens, eine Flash-Anlage (2), eine Anlage zur Phasentrennung (3) mit nachgeschalteter Vorrichtung zur Destillation (4), eine Vorrichtung zur Kondensation (5), eine Vorrichtung zur Destillation (6) und eine weitere Vorrichtung zur Destillation (7). Die Abkürzungen stehen für Dien-Monomer (M), Polydien-Produkt (P), Initiator Wasserstoffperoxid (I), Lösungsmittel (L), Abwasser (A) und Desoxiadtionsmittel (H). Leitungen zur Überführung von Stoffen zwischen den Behältnissen sind im Format "XLY" benannt, wobei X die Nummer des Behältnisses bezeichnet, aus dem der Stoff austritt, und Y die Nummer des Behältnisses, in den der aus dem Behältnis X austretende Stoff eintritt.

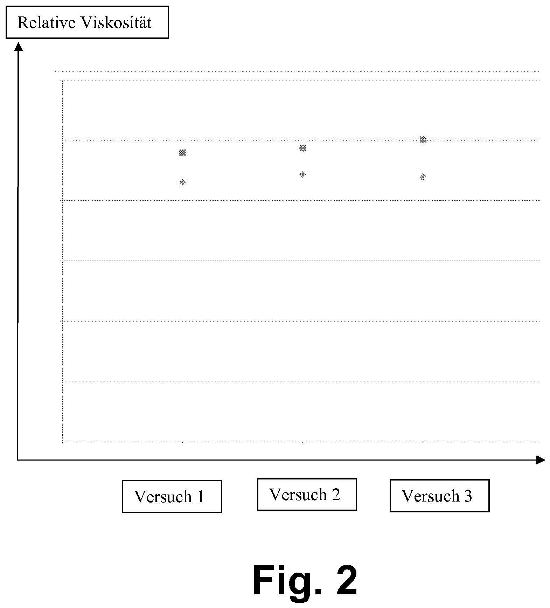

**Fig. 2** zeigt die relativen Viskositäten der Reaktionsmischung bei Durchführung des erfindungsgemäßen Verfahrens in Beispiel 2 (Raute) und Beispiel 12 (Quadrat) nach 135 Minuten. Die drei Punktepaare stehen für drei unabhängig voneinander durchgeführte Experimente.

### Beispiel 1:

In einem passivierten 5 L-Edelstahlautoklav der Fa. Büchi (Typ 4; Edelstahl: 1.4571; Druckbeständigkeit: -1 bis 40 bar) wurden zunächst 491 mL mit Toluol vergälltem Ethanol (92%ig) vorgelegt. Im Anschluss wurden 1214 g 1,3-Butadien zudosiert.. Nach Erreichen von mindestens 90 °C wurde bei mindestens 14 bar 74 ml Wasserstoffperoxid (50%ig) über eine Schleuse zudosiert. Die Schleuse wurde im Anschluss mit vollentsalztem Wasser gespült. Danach wurde der Reaktorinhalt weiter auf 120 °C aufgeheizt. Ab dem Zeitpunkt der Zudosierung des Wasserstoffperoxids wurde die Reaktion für 2 h auf 120 °C gebracht und dann bei dieser Temperatur gehalten. Die Druckwerte während der Reaktion hatten einen Verlauf von 14 - 28 bar.

Nach Ablauf der Reaktionszeit wurde der Reaktorinhalt auf kleiner gleich 78 °C abgekühlt. Nach Erreichen der 78 °C wurde der Reaktorinhalt in den dafür vorgesehenen Behälter (Flash-Anlage) entspannt und dabei das überschüssige Butadien abgetrennt. In diesem Behälter waren 650 g Wasser bei 40 bis 80 °C vorgelegt worden. Der Inhalt des Flash-Behälters wurde für eine Stunde bei 60°C unter einem gegenüber Atmosphärendruck um 0,2 bis 0,4 erniedrigtem Druck gerührt, um den Rest des Butadien-Monomers zu entfernen. Nach einer Absetzzeit von 8 min bis einer Stunde erhielt man zwei Phasen. Die obere organische Phase enthielt das gewünschte Polymer, die untere wässrige Phase das nicht umgesetzte Wasserstoffperoxid.

Die organische Phase wurde in einem handelsüblichen Scheidetrichter von der wässrigen Phase getrennt. Die flüchtigen organischen Bestandteile wurden aus der organischen Phase am Vakuum entfernt, blieben 595 g des gewünschte Produkts zurück, was bezogen auf die Menge des eingesetzten Butadiens einer Ausbeute von 49% entspricht.

### Beispiel 2:

In einem passivierten 5 L-Edelstahlautoklav der Fa. Büchi (Typ 4; Edelstahl: 1.4571; Druckbeständigkeit: -1 bis 40 bar) wurde zunächst 491 ml mit Toluol vergälltem Ethanol (92%ig) vorgelegt. Im Anschluss wurden 1214 g Butadien zudosiert. Während der Zudosierung des Butadiens wurde bereits begonnen, den Reaktorinhalt auf 90 °C bis 100 °C aufzuheizen. Nach Erreichen von mind. 90 °C wurde (bei mindestens 14 bar)) 74 ml Wasserstoffperoxid (35%ig) über eine Schleuse zudosiert. Die Schleuse wurde im Anschluss mit vollentsalztem Wasser gespült. Danach wurde der Reaktorinhalt weiter auf 120 °C aufgeheizt und für die Reaktionszeit bei dieser Temperatur und Druckwerten von 14 bis 29 bar gehalten. Ab dem Zeitpunkt der Zudosierung des Wasserstoffperoxids wurde die Reaktionszeit von 2 Stunden bemessen. Nach Ende der Reaktionszeit wurde der Reaktorinhalt direkt aus dem Polymerisationskessel auf 3 bar bis 1 bar entspannt (Druckflash), dieser dauerte ca. 15 min. Der Reaktorinhalt wurde nach dem Entfernen des Hauptteils des 1,3-Butadiens mit Hilfe des Restdruck (3 bis 1 bar) im Reaktor oder unter Aufbringen von Stickstoffdruck in den Flash/Waschbehälter überführt und das überschüssige Butadien abgetrennt.

In diesem Flash/Wasch-Behälter waren 650 g Wasser bei 60 °C vorgelegt worden. Der Inhalt des Flash/Wasch - Behälters wurde für eine Stunde bei 60 °C unter einem Vakuum von 0,6 bis 0,8 bar gerührt, um den Rest des Butadienmonomers zu entfernen. Nach einer Absetzzeit von 8 Minuten bis einer Stunde erhielt man zwei Phasen. Die obere organische Phase enthielt das gewünschte Polymer, die untere wässrige Phase das nicht umgesetzte Wasserstoffperoxid.

Die organische Phase wurde in einem handelsüblichen Scheidetrichter von der wässrigen Phase getrennt. Die flüchtigen organischen Bestandteile wurden aus der organischen Phase am Vakuum entfernt, blieb 575 g des gewünschte Produkts zurück, was bezogen auf die Menge des eingesetzten Butadiens einer Ausbeute von 47 % entspricht.

### Beispiel 3

In einem passivierten 5 L-Edelstahlautoklav der Fa. Büchi (Typ 4; Edelstahl: 1.4571; Druckbeständigkeit: -1 bis 40 bar) wurde zunächst 560 ml Ethanol (92%ig) vorgelegt. Im Anschluss wurden 1214 g Butadien zudosiert. Nach Erreichen von mind. 90 °C wurde (bei mindestens 14 bar) 74,0 ml Wasserstoffperoxid (50%ig) über eine Schleuse zudosiert. Die Schleuse wurde im Anschluss mit vollentsalztem Wasser gespült. Danach wurde der Reaktorinhalt weiter auf 120 °C aufgeheizt und für die Reaktionszeit bei dieser Temperatur und Druckwerten von 14 bis 29 bar gehalten. Ab dem Zeitpunkt der Zudosierung des Wasserstoffperoxids wurde die Reaktionszeit von 2 Stunden bemessen. Nach Ende der Reaktionszeit wurde der Reaktorinhalt direkt aus dem Polymerisationskessel auf 3 bar entspannt (Druckflash), dieser Flash-Vorgang dauerte ca. 15 min. Der Reaktorinhalt wurde nach dem Entfernen des Hauptteils des 1,3-Butadiens mit Hilfe des Restdruck (3 bar) im Reaktor und/oder alternativ unter Aufbringen von Stickstoffdruck in den Flash/Waschbehälter überführt und das überschüssige Butadien abgetrennt.

In diesem Flash/Wasch-Behälter waren 650 g Wasser bei 60 °C vorgelegt worden. Der Inhalt des Flash/Wasch - Behälters wurde für eine Stunde bei 60°C unter einem Vakuum von 0,6 bis 0,8 bar abs gerührt, um den Rest des Butadienmonomers zu entfernen. Nach einer Absetzzeit ab 8 Minuten erhielt man zwei Phasen. Die obere organische Phase enthielt das gewünschte Polymer, die untere wässrige Phase das nicht umgesetzte Wasserstoffperoxid.

Die organische Phase wurde in einem handelsüblichen Scheidetrichter von der wässrigen Phase getrennt. Die flüchtigen organischen Bestandteile wurden aus der organischen Phase am Vakuum entfernt, blieb 633,8 g, was bezogen auf die Menge des eingesetzten Butadiens einer Ausbeute von 47 % entspricht.

### Beispiel 4:

Die Durchführung erfolgte wie in Beispiel 2 beschrieben. Abweichend davon betrug die Reaktionszeit 1 Stunde. Es wurde eine Ausbeute von 20 % bezogen auf das eingesetzte Monomer erhalten. Diese Variation der Reaktionsdauer geht mit einer Senkung der Viskosität einher.

### Beispiel 5:

Die Durchführung erfolgte wie in Beispiel 2 beschrieben. Abweichend davon betrug die Reaktionszeit 3 Stunden.
Es wurde eine Ausbeute von 55 % bezogen auf das eingesetzte Monomer erhalten. Diese Variation der Reaktionsdauer geht mit einer Steigerung der Viskosität, einher.

### Beispiel 6:

Die Durchführung erfolgte wie in Beispiel 2 beschrieben. Abweichend davon betrug die Reaktionszeit 4 Stunden.
Es wurde eine Ausbeute von 62 % bezogen auf das eingesetzte Monomer erhalten. Diese Variation der Reaktionsdauer geht mit einer Steigerung der Viskosität, einher.

### Beispiel 7:

Die Durchführung erfolgte wie in Beispiel 1 beschrieben, die Menge des Wasserstoffperoxids wurde auf 80 % der in Bsp. 1 genannten Menge reduziert. Es wurde eine Ausbeute von 43 % bezogen auf das eingesetzte Monomer erhalten.

### Beispiel 8:

Die Durchführung erfolgte wie in Beispiel 2 beschrieben, die Menge des Wasserstoffperoxids wurde auf 120 % der in Bsp 1 genannten Menge erhöht. Es wurde eine Ausbeute von 54,5 % bezogen auf das eingesetzte Monomer erhalten.

### Beispiel 9:

Die Durchführung erfolgte wie in Beispiel 1 beschrieben, anstatt Ethanol wurde Isopropanol verwendet. Es wurde eine Ausbeute von 46 % bezogen auf das eingesetzte Monomer erhalten.

### Beispiel 10:

Die Durchführung erfolgte wie in Beispiel 2 beschrieben, die Menge an Ethanol wurde auf 20Gew% des Ansatzes gesetzt. Es wurde eine Ausbeute von 47 % bezogen auf das eingesetzte Monomer erhalten.

### Beispiel 11:

Die Durchführung des Versuches erfolgte wie in Beispiel 2, die Menge an Ethanol wurde auf 30 Gew% des Ansatzes gesetzt. Es wurde eine Ausbeute von 43 % bezogen auf das eingesetzte Monomer erhalten.

### Beispiel 12:

Die Durchführung erfolgte wie in Beispiel 2, aber der Reaktorinhalt wurde ohne vorheriges Entspannen des Monomers aus dem Reaktionskessel in den dafür vorgesehenen Behälter (Flash-Anlage) entspannt, wobei das überschüssige Butadien abgetrennt wurde. Die Viskosität der Reaktionsmischung nach 135 Minuten ist in Fig. 2 im Vergleich zu der Viskosität aufgetragen, wie sie bei der Versuchsdurchführung nach Beispiel 2 erhalten wurde.

Es zeigt sich, dass eine frühe Abtrennung des Monomers nach Ablauf der Reaktion zur Verringerung der Viskosität führt.

## Patentansprüche

1. Verfahren zur Polymerisation eines Diens, bevorzugt 1,3-Butadien oder Isopren, umfassend die Schritte
a) Umsetzung des Diens mit Wasserstoffperoxid in einem hydrophilen organischen Lösungsmittel in Anwesenheit von Wasser unter Bildung eines Reaktionsgemisches bei Temperaturen von 50 bis 150 °C und Druckwerten von 0 bis 50 bar.
b) Kontaktieren des Reaktionsgemisches mit Wasser, wobei die Temperatur des Wassers 20 bis 80 °C, bevorzugt 50 bis 65 °C beträgt.
c) Abtrennen von nicht abreagiertem gasförmigen Dien von dem mit Wasser kontaktierten Reaktionsgemisch aus Schritt b), gefolgt von Kondensation, Destillation und Wiederverwendung des nicht abreagierten gasförmigen Diens,
d) Abtrennen der wässrigen Phase umfassend das hydrophile Lösungsmittel vom Reaktionsgemisch, gefolgt von Wiederverwendung des hydrophilen Lösungsmittels in Schritt a), und
e) Destillatives Reinigen des Polymerisationsproduktes,
wobei wenigstens ein Teil des nicht abreagierten gasförmigen Diens vor dem Kontaktieren mit Wasser in Schritt b) vom Reaktionsgemisch abgetrennt wird, gefolgt von Kondensation, Destillation und Wiederverwendung des nicht abreagierten gasförmigen Diens.

2. Verfahren nach Anspruch 1, wobei es sich bei dem hydrophilen Lösungsmittel um ein bei Raumtemperatur flüssiges Alkanol, bevorzugt Isopropanol oder Ethanol, handelt.

3. Verfahren nach einem der Ansprüche 1 bis 2, wobei der Anteil in Schritt a) des hydrophilen Lösungsmittels 15 bis 30 Gew.-%, bevorzugt 22 bis 30 Gew.-%, der des Diens 60 bis 80 Gew.-%, der des Wassers weniger als 10 Gew.-%, bevorzugt 2 bis 8,1 Gew.-%, und der des Wasserstoffperoxids 1 bis 5 Gew.-% beträgt.

4. Verfahren nach einem der Ansprüche 1 bis 3, wobei Schritt a) bei einer Temperatur von 90 bis 130 °C, bevorzugt 110 bis 130 °C durchgeführt wird.

5. Verfahren nach einem der Ansprüche 1 bis 4, wobei Schritt a) bei Druckwerten von 12 bis 30 bar durchgeführt wird.

6. Verfahren nach einem der Ansprüche 1 bis 5, wobei das Reaktionsgemisch aus Schritt a) zu Beginn von Schritt b) eine um nicht mehr als 20, bevorzugte 15, noch bevorzugter 10 °C niedrigere Temperatur als in Schritt a) aufweist.

7. Verfahren nach Anspruch 6, wobei die Temperatur des Reaktionsgemisches bei Schritt a) 110 bis 130 °C und die Temperatur des Reaktionsgemisches zu Beginn von Schritt b) nicht weniger als 100 °C beträgt.

8. Verfahren nach einem der Ansprüche 1 bis 7 wobei das Wasser in Schritt b) eine Temperatur von wenigstens 40 °C, bevorzugt 40 bis 80 °C, noch bevorzugter 50 bis 65 °C aufweist.

9. Verfahren nach einem der Ansprüche 1 bis 9, wobei in Schritt c) das kondensierte Dien mit einem Desoxidationsmittel kontaktiert wird, wobei das Desoxidationsmittel bevorzugt aus der Gruppe ausgewählt ist, die Dithionit, Pyrogallol, Ascorbinsäure und eine Mischung umfassend Bisulfit und Sulfit umfasst.

10. Verfahren nach einem der Ansprüche 8 bis 9, wobei als Desoxidationsmittel eine Mischung umfassend Bisulfit und Sulfit in einer Endkonzentration von 0,1 bis 1,5 Gew.-%, bevorzugt 0,2 bis 1 Gew.-% zum kondensierten Dien gegeben wird.

11. Verfahren nach einem der Ansprüche 1 bis 10, wobei die Reaktionsmischung aus Schritt a) ohne vorherige Kühlung in Schritt b) mit Wasser kontaktiert wird.

12. Anlage zur Polymerisation eines bei Raumtemperatur gasförmigen Diens umfassend einen Reaktionsbehälter (1) zur Polymerisation des Diens,
eingerichtet für die Umsetzung eines Diens mit Wasserstoffperoxid in einem hydrophilen organischen Lösungsmittel unter Bildung einer Reaktionsmischung,
umfassend eine Flash-Anlage (2),
eingerichtet dafür, dass die Reaktionsmischung aus dem Reaktionsbehälter (1) in sie abführbar ist,
eingerichtet dafür, dass nicht abreagiertes, gasförmiges Dien aus der Flash-Anlage von der Reaktionsmischung abtrennbar und überführbar ist in eine Vorrichtung zur Kondensation (5), anschließend in eine Vorrichtung zur Destillation (6) und schließlich zurück in den Reaktionsbehälter (1),
eingerichtet dafür, dass darin Wasser vorgelegt und mit der Reaktionsmischung aus dem Reaktionsbehälter (1) kontaktiert werden kann unter Bildung einer wässrigen, das hydrophile organische Lösungsmittel umfassenden Phase,
weiter umfassend eine der Flash-Anlage nachgeschaltete Anlage zur Phasentrennung (3),
eingerichtet dafür, dass die von dem nicht abreagierten, gasförmigen Dien abgetrennte Reaktionsmischung aus der Flash-Anlage (2) in sie überführbar ist,
eingerichtet dafür, dass die wässrige, das hydrophile organische Lösungsmittel umfassende Phase von der Reaktionsmischung abtrennbar und überführbar ist zunächst in eine Vorrichtung zur Destillation (7) und schließlich zurück in den Reaktionsbehälter (1),
weiter umfassend eine der Anlage zur Phasentrennung (3) nachgeschaltete Vorrichtung zur Destillation (4),
eingerichtet dafür, dass die von der wässrigen, das hydrophile organische Lösungsmittel umfassenden Phase abgetrennte Reaktionsmischung aus der Anlage zur Phasentrennung (3) in sie überführbar ist,
eingerichtet dafür, dass das Produkt aus der von der wässrigen, das hydrophile organische Lösungsmittel umfassenden Phase abgetrennten Reaktionsmischung destillativ aufgereinigt werden kann,
wobei der Reaktionsbehälter (1) eingerichtet ist dafür, dass nichtabreagiertes, gasförmiges Dien aus dem Reaktionsbehälter überführbar ist in eine Vorrichtung zur Kondensation (5), anschließend in eine Vorrichtung zur Destillation (6) und schließlich zurück in den Reaktionsbehälter (1).

13. Anlage nach Anspruch 12, wobei es sich bei dem Reaktionsbehälter (1) um einen Behälter aus passiviertem Edelstahl handelt.

14. Anlage nach einem der Ansprüche 12 bis 13, wobei die Eigenschaft, dass die Reaktionsmischung oder die das hydrophile organische Lösungsmittel umfassende Phase oder das nicht abreagierte, gasförmige Dien zwischen dem Reaktionsbehälter (1), der Flash-Anlage (2), der Vorrichtung zur Kondensation (5), der Vorrichtung zur Destillation (6), der Anlage zur Phasentrennung (3), der Vorrichtung zur Destillation (7) überführbar sind, durch geeignete verbindende Rohrleitungen gegeben ist.

15. Anlage nach einem der Ansprüche 12 bis 14, wobei die Vorrichtung zur Kondensation (5) ein Desoxidationsmittel umfasst, bevorzugt ausgewählt aus der Gruppe umfassend Dithionit, Pyrogallol, Ascorbinsäure und eine Mischung umfassend Bisulfit und Sulfit.

16. Verwendung der Anlage nach einem der Ansprüche 12 bis 15 zur Polymerisation eines Diens, bevorzugt 1,3-Butadien oder Isopren.

## Claims

1. Process for the polymerization of a diene, preferably 1,3-butadiene or isoprene, which comprises the steps:
a) reaction of the diene with hydrogen peroxide in a hydrophilic organic solvent in the presence of water to form a reaction mixture at temperatures of 50-150°C and pressures of from 0 to 50 bar,
b) contacting of the reaction mixture with water, where the temperature of the water is from 20 to 80°C, preferably from 50 to 65°C,
c) separation of unreacted gaseous diene from the reaction mixture which has been contacted with water in step b), followed by condensation, distillation and reuse of the unreacted gaseous diene,
d) separation of the aqueous phase comprising the hydrophilic solvent from the reaction mixture, followed by reuse of the hydrophilic solvent in step a), and
e) purification of the polymerization product by distillation,
wherein at least part of the unreacted gaseous diene is separated from the reaction mixture before contacting with water in step b), followed by condensation, distillation and reuse of the unreacted gaseous diene.

2. Process according to Claim 1, wherein the hydrophilic solvent is an alkanol which is liquid at room temperature, preferably isopropanol or ethanol.

3. Process according to either Claim 1 or 2, wherein the proportion of the hydrophilic solvent in step a) is from 15 to 30% by weight, preferably from 22 to 30% by weight, that of the diene is from 60 to 80% by weight, that of the water is less than 10% by weight, preferably from 2 to 8.1% by weight, and that of the hydrogen peroxide is from 1 to 5% by weight.

4. Process according to any of Claims 1 to 3, wherein step a) is carried out at a temperature of from 90 to 130°C, preferably from 110 to 130°C.

5. Process according to any of Claims 1 to 4, wherein step a) is carried out at pressures of from 12 to 30 bar.

6. Process according to any of Claims 1 to 5, wherein the reaction mixture from step a) has a temperature at the beginning of step b) which is not more than 20°C lower, preferably 15°C lower, more preferably 10°C lower, than that in step a).

7. Process according to Claim 6, wherein the temperature of the reaction mixture in step a) is from 110 to 130°C and the temperature of the reaction mixture at the beginning of step b) is not less than 100°C.

8. Process according to any of Claims 1 to 7, wherein the water in step b) has a temperature of at least 40°C, preferably from 40 to 80°C, more preferably from 50 to 65°C.

9. Process according to any of Claims 1 to 9, wherein the condensed diene is contacted with an antioxidant in step c), where the antioxidant is preferably selected from the group consisting of dithionite, pyrogallol, ascorbic acid and a mixture comprising bisulphite and sulphite.

10. Process according to either Claim 8 or 9, wherein the antioxidant is a mixture comprising bisulphite and sulphite in a final concentration of from 0.1 to 1.5% by weight, preferably from 0.2 to 1% by weight, based on the condensed diene.

11. Process according to any of Claims 1 to 10, wherein the reaction mixture from step a) is contacted with water without prior cooling in step b).

12. Apparatus for the polymerization of a diene which is gaseous at room temperature,
which comprises a reaction vessel (1) for the polymerization of the diene,
which is suitable for reaction of a diene with hydrogen peroxide in a hydrophilic organic solvent to form a reaction mixture,
a flash apparatus (2)
which is suitable for allowing the reaction mixture to be discharged from the reaction vessel (1) into it,
is suitable for allowing unreacted, gaseous diene from the flash apparatus to be separated from the reaction mixture and transferred into an apparatus for condensation (5), subsequently into an apparatus for distillation (6) and finally back into the reaction vessel (1), and
is suitable for enabling water to be initially placed therein and contacted with the reaction mixture from the reaction vessel (1) to form an aqueous phase comprising the hydrophilic organic solvent,
also an apparatus for phase separation (3) located downstream of the flash apparatus,
which is suitable for allowing the reaction mixture separated from the unreacted, gaseous diene in the flash apparatus (2) to be transferred into it and
suitable for enabling the aqueous phase comprising the hydrophilic organic solvent to be separated from the reaction mixture and transferred firstly into an apparatus for distillation (7) and finally back into the reaction vessel (1),
also an apparatus for distillation (4) located downstream of the apparatus for phase separation (3),
which is suitable for enabling the reaction mixture separated from the aqueous phase comprising the hydrophilic organic solvent in the apparatus for phase separation (3) to be transferred into it and
suitable for enabling the product from the reaction mixture separated from the aqueous phase comprising the hydrophilic organic solvent to be purified by distillation,
wherein the reaction vessel (1) is suitable for enabling unreacted, gaseous diene to be transferred from the reaction vessel into an apparatus for condensation (5), subsequently into an apparatus for distillation (6) and finally back into the reaction vessel (1).

13. Apparatus according to Claim 12, wherein the reaction vessel (1) is a vessel made of passivated stainless steel.

14. Apparatus according to either Claim 12 or 13, wherein the reaction mixture or the phase comprising the hydrophilic organic solvent or the unreacted, gaseous diene can be transferred between the reaction vessel (1), the flash apparatus (2), the apparatus for condensation (5), the apparatus for distillation (6), the apparatus for phase separation (3), the apparatus for distillation (7) by means of suitable connecting pipes.

15. Apparatus according to any of Claims 12 to 14, wherein the apparatus for condensation (5) comprises an antioxidant which is preferably selected from the group consisting of dithionite, pyrogallol, ascorbic acid and a mixture comprising bisulphite and sulphite.

16. Use of the apparatus according to any of Claims 12 to 15 for the polymerization of a diene, preferably 1,3-butadiene or isoprene.

## Revendications

1. Procédé pour la polymérisation d'un diène, de préférence le 1,3-butadiène ou l'isoprène, comprenant les étapes de
a) transformation du diène avec du peroxyde d'hydrogène dans un solvant organique hydrophile en présence d'eau avec formation d'un mélange réactionnel à des températures de 50 à 150°C et des valeurs de pression de 0 à 50 bars,
b) mise en contact du mélange réactionnel avec de l'eau, la température de l'eau étant de 20 à 80°C, de préférence 50 à 65°C,
c) séparation du diène gazeux qui n'a pas réagi du mélange réactionnel mis en contact avec l'eau de l'étape b), suivie d'une condensation, d'une distillation et d'une réutilisation du diène gazeux qui n'a pas réagi,
d) séparation de la phase aqueuse comprenant le solvant hydrophile du mélange réactionnel, suivie d'une réutilisation du solvant hydrophile dans l'étape a) et
e) purification par distillation du produit de polymérisation,
au moins une partie du diène gazeux qui n'a pas réagi étant séparée du mélange réactionnel avant la mise en contact avec l'eau dans l'étape b), la séparation étant suivie d'une condensation, d'une distillation et d'une réutilisation du diène gazeux qui n'a pas réagi.

2. Procédé selon la revendication 1, le solvant hydrophile étant un alcanol liquide à température ambiante, de préférence l'isopropanol ou l'éthanol.

3. Procédé selon l'une quelconque des revendications 1 à 2, la proportion de solvant hydrophile dans l'étape a) étant de 15 à 30% en poids, de préférence de 22 à 30% en poids, celle du diène étant de 60 à 80% en poids, celle de l'eau étant inférieure à 10% en poids, de préférence de 2 à 8,1% en poids, et celle du peroxyde d'hydrogène étant de 1 à 5% en poids.

4. Procédé selon l'une quelconque des revendications 1 à 3, l'étape a) étant réalisée à une température de 90 à 130°C, de préférence de 110 à 130°C.

5. Procédé selon l'une quelconque des revendications 1 à 4, l'étape a) étant réalisée à des valeurs de pression de 12 bars à 30 bars.

6. Procédé selon l'une quelconque des revendications 1 à 5, le mélange réactionnel de l'étape a) présentant, au début de l'étape b), une température inférieure de pas plus de 20, de préférence de 15, encore plus préférablement de 10°C à celle dans l'étape a).

7. Procédé selon la revendication 6, la température du mélange réactionnel lors de l'étape a) étant de 110 à 130°C et la température du mélange réactionnel au début de l'étape b) n'étant pas inférieure à 100°C.

8. Procédé selon l'une quelconque des revendications 1 à 7, l'eau dans l'étape b) présentant une température d'au moins 40°C, de préférence de 40 à 80°C, encore plus préférablement de 50 à 65°C.

9. Procédé selon l'une quelconque des revendications 1 à 9, le diène condensé, dans l'étape c), étant mis en contact avec un agent de désoxydation, l'agent de désoxydation étant de préférence choisi dans le groupe comprenant la dithionite, le pyrogallol, l'acide ascorbique et un mélange comprenant du bisulfite et du sulfite.

10. Procédé selon l'une quelconque des revendications 8 à 9, un mélange comprenant du bisulfite et du sulfite en une concentration finale de 0,1 à 1,5% en poids, de préférence de 0,2 à 1% en poids, étant ajouté au diène condensé en tant qu'agent de désoxydation.

11. Procédé selon l'une quelconque des revendications 1 à 10, le mélange réactionnel de l'étape a) étant mis en contact avec l'eau dans l'étape b) sans refroidissement préalable.

12. Installation pour la polymérisation d'un diène gazeux à température ambiante,
comprenant un récipient de réaction (1) pour la polymérisation du diène,
conçu pour la transformation d'un diène avec du peroxyde d'hydrogène dans un solvant organique hydrophile avec formation d'un mélange réactionnel,
comprenant une installation de détente (2),
conçue pour que le mélange réactionnel provenant du récipient de réaction (1) puisse y être évacué, conçue pour que le diène gazeux qui n'a pas réagi provenant de l'installation de détente puisse être séparé du mélange réactionnel et transféré dans un dispositif (5) pour la condensation, ensuite dans un dispositif (6) pour la distillation et enfin de retour dans le récipient de réaction (1), conçue pour que de l'eau puisse y être disposée au préalable et mise en contact avec le mélange réactionnel provenant du récipient de réaction (1) avec formation d'une phase aqueuse comprenant le solvant organique hydrophile,
comprenant en outre une installation (3) pour la séparation des phases disposée en aval de l'installation de détente,
conçue pour que le mélange réactionnel séparé du diène gazeux qui n'a pas réagi provenant de l'installation de détente (2) puisse y être transféré,
conçue pour que la phase aqueuse, comprenant le solvant organique hydrophile, puisse être séparée du mélange réactionnel et transférée, d'abord dans un dispositif (7) pour la distillation et enfin de retour dans le récipient de réaction (1),
comprenant en outre un dispositif (4) pour la distillation, disposé en aval de l'installation (3) pour la séparation des phases,
conçu pour que le mélange réactionnel, séparé de la phase aqueuse comprenant le solvant organique hydrophile, provenant de l'installation (3) pour la séparation des phases puisse y être transféré, conçu pour que le produit provenant du mélange réactionnel, séparé de la phase aqueuse comprenant le solvant organique hydrophile, puisse être purifié par distillation,
le récipient de réaction (1) étant conçu pour que le diène gazeux qui n'a pas réagi provenant de l'installation de détente puisse être transféré dans un dispositif (5) pour la condensation, ensuite dans un dispositif (6) pour la distillation et enfin de retour dans le récipient de réaction (1).

13. Installation selon la revendication 12, le récipient de réaction (1) étant un récipient en acier inoxydable passivé.

14. Installation selon l'une quelconque des revendications 12 à 13, la propriété de transfert du mélange réactionnel ou de la phase comprenant le solvant organique hydrophile ou du diène gazeux qui n'a pas réagi entre le récipient de réaction (1), l'installation de détente (2), le dispositif (5) pour la condensation, le dispositif (6) pour la distillation, l'installation (3) pour la séparation des phases, le dispositif (7) pour la distillation est apportée par des conduites tubulaires de raccord appropriées.

15. Installation selon l'une quelconque des revendications 12 à 14, le dispositif (5) pour la condensation comprenant un agent de désoxydation, de préférence choisi dans le groupe comprenant la dithionite, le pyrogallol, l'acide ascorbique et un mélange comprenant du bisulfite et du sulfite.

16. Utilisation de l'installation selon l'une quelconque des revendications 12 à 15 pour la polymérisation d'un diène, de préférence le 1,3-butadiène ou l'isoprène.
